# EUROPÄISCHE PATENTSCHRIFT

(11) **EP 3 892 852 B1**
(45) Veröffentlichungstag und Bekanntmachung des Hinweises auf die Patenterteilung: **10.07.2024**
(21) Anmeldenummer: 21177639.8
(22) Anmeldetag: 29.04.2015
(51) Int. Cl.: F03D 7/06, F03D 3/00, F03D 3/02, F03D 3/06

(54) **VERTIKALE WINDKRAFTANLAGE SOWIE VERFAHREN ZUM BETRIEB EINER SOLCHEN ANLAGE**
VERTICAL WIND POWER ASSEMBLY AND METHOD FOR OPERATING SAME
ÉOLIENNE VERTICALE, AINSI QUE PROCÉDÉ DE FONCTIONNEMENT D'UNE TELLE ÉOLIENNE

(30) Priorität: 06.06.2014 CH 8682014
(43) Veröffentlichungstag der Anmeldung: 13.10.2021
(62) Teilanmeldung aus: 15720327.4
(73) Patentinhaber: Agile Wind Power AG, 8600 Dübendorf (CH)
(72) Erfinder: Bahnmüller, Karl, 8953 Dietikon (CH); Hug, Hans Thomas, 8484 Weisslingen (CH)
(74) Vertreter: Keller Schneider Patent- und Markenanwälte AG

(56) Entgegenhaltungen:
- WO-A1-94/25750
- GB-A- 2 000 556
- US-A- 4 410 806

## Beschreibung

### TECHNISCHES GEBIET

Die vorliegende Erfindung bezieht sich auf das Gebiet der Windkraftanlagen. Sie betrifft eine vertikale Windkraftanlage gemäss dem Oberbegriff des Anspruchs 1. Sie betrifft weiterhin ein Verfahren zum Betrieb einer solchen Anlage.

### STAND DER TECHNIK

Neben den üblichen, meist mit drei Flügeln ausgestatteten horizontalen Windkraftanlagen, die kommerziell in grosser Zahl hergestellt und eingesetzt werden und Leistungen im MW-Bereich abgeben, werden auch immer wieder vertikale Windkraftanlagen vorgeschlagen, die nach unterschiedlichen Prinzipien arbeiten können.

Die Druckschrift US 3,902,072 A offenbart einen Windkraftgenerator mit einer horizontalen rotierenden Plattform, auf der am Aussenumfang eine Vielzahl von vertikalen Flügeln angeordnet ist, die alle koaxial um eine zentrale Achse und jeweils um eine eigene Achse rotieren. Die Drehung der vertikalen Flügel richtet sich nach Änderungen in der Windrichtung und Windgeschwindigkeit und die Drehung jedes einzelnen Flügels ist so gesteuert, dass auf % des Umlaufsweges der Plattform aus dem Wind Leistung entnommen wird, während auf dem Rest des Weges die Flügel so gestellt sind, dass sie dem Wind minimalen Widerstand bieten. Die Steuerung der Flügel erfolgt über eine zentrale Getriebe- Mechanik mit einem gemeinsamen Servomotor.

Die Druckschrift US 4,410,806 A beschreibt eine vertikale Windkraftanlage mit einer rotierenden Struktur, die eine Serie von drehbeweglichen vertikalen Flügeln umfasst, deren Stellungen so gesteuert werden, dass sich eine konstante Drehzahl für die rotierende Struktur ergibt, sofern eine ausreichende Windgeschwindigkeit vorliegt. Eine Mikroprozessor-Steuerung verarbeitet die Informationen über Windgeschwindigkeit, Windrichtung und Drehzahl der rotierenden Struktur und erzeugt ein elektrisches Signal zum Einstellen der Flügelposition. Die Steuerung der Anlage umfasst elektrische Flügel-Aktuatoren, mit deren Hilfe die Flügel der rotierenden Struktur moduliert werden. Die Flügelmodulation steuert den Anstellwinkel, der seinerseits die Drehzahl des Rotors bestimmt. Ein Windgeschwindigkeitsmesser gibt Daten für Start und Stopp der Anlage aus, während ein Windrichtungsmesser eingesetzt wird, um das Umschlagen der Flügel bei 90 ° und 270 ° relativ zur Windrichtung zu halten. Die Steuerung ist so ausgelegt, dass bei Windgeschwindigkeiten zwischen 19 und 40 Meilen/h eine konstante Drehzahl aufrechterhalten wird.

Die Druckschrift US 4,494,007 A offenbart eine vertikale Windkraftanlage, bei der die Orientierung der um eine gemeinsame zentrale Achse rotierenden Flügel von einer Windfahne über eine gemeinsame Mechanik während ihres Umlaufs um die zentrale Achse so gesteuert wird, dass, wenn sich die Windgeschwindigkeit ändert, die Drehstellung der Flügel in einer kompensierenden Richtung verändert wird.

Die Druckschrift US 4,609,827 A beschreibt eine vertikale Windkraftanlage mit Blättern mit Flügelprofil. En positives und synchrones Flügel-Orientierungssystem wird durch einen ausserhalb des Rotors angeordneten Mechanismus gesteuert. Zwei neuartige Einrichtungen verbessern die aerodynamische Effizienz und erhöhen die Rotationskräfte.

Die in der Druckschrift US 6,379,115 B1 offenbarte Windkraftanlage umfasst eine drei rotierende Drehachse sowie eine Mehrzahl von an der Achse angebrachten, drehenden Stützarmen, zwischen denen Flügel zur Aufnahme der Windkraft drehbar gelagert sind. Ein Windmesser misst Windrichtung und -geschwindigkeit. Servomotoren an den Flügeln steuern die Stellung der Flügel nach Massgabe der gemessenen Winddaten. Verschieden Methoden der Steuerung werden dazu angegeben.

Die Druckschrift US 2008175709 A1 beschreibt eine Turbine mit hohem Wirkungsgrad zur Energieerzeugung aus einer Wind- oder Wasserströmung. Die Turbine hat eine zentrale Achse mit einer Mehrzahl von Flügeln, die um die Achse herum nach Art eines Schaufelrades drehbar sind. Jeder Flügel hat eine Flügelachse parallel zur Flügellängsrichtung und zur zentralen Achse und ist um die Flügelachse drehbar. Während des Betriebs der Turbine nimmt jeder Flügel einen Anstellwinkel zur Strömungsrichtung an, der dynamisch gesteuert wird, wenn sich der Flügel um die zentrale Achse dreht, um das Drehmoment des Flügels um die Achse zu maximieren.

Die Druckschrift WO 2009086648 A2 schliesslich zeigt eine Windkraftanlage mit wenigstens einem um eine vertikale Achse drehbaren Rotor, welcher zwischen zwei horizontalen, mit Abstand übereinander liegenden Lagerebenen eine Mehrzahl von auf einem Umfangskreis verteilt angeordneten, jeweils um eine vertikale Schwenkachse schwenkbaren Rotorblättern umfasst, deren Schwenkbereich beidseitig durch einen Anschlag begrenzt ist, wobei die Breite der Rotorblätter kleiner als ungefähr 1/3 des Radius des Umfangskreises ist. Insbesondere können dabei Rotorblätter in mehreren Ebenen übereinander angeordnet sein.

Weiterer Stand der Technik ist in WO 94/25750 A1 offenbart.

Die bekannten vertikalen Windkraftanlagen sind für bodennahe Winde ausgelegt und weisen daher eine vergleichsweise geringe Gesamthöhe auf. Wird eine solche Anlage jedoch für Höhen ausgelegt, die den Höhen der heutigen horizontalen Windkraftanlagen vergleichbar sind, muss eine Höhenabhängigl<eit der Windgeschwindigkeit und ggf. sogar Windrichtung in die Überlegungen zu einer möglichst effizienten Energieerzeugung mit einbezogen werden.

### DARSTELLUNG DER ERFINDUNG

Es ist daher eine Aufgabe der Erfindung, eine vertikale Windkraftanlage zu schaffen, die auch auf grössere Gesamthöhen hin skalierbar ist und zugleich einen hohen Wirkungsgrad bei gleichzeitig einfachem und funl<tionssicherem Aufbau ermöglicht.

Es ist weiterhin eine Aufgabe der Erfindung, ein Verfahren zum Betrieb einer solchen Anlage anzugeben.

Diese und andere Aufgaben werden durch die Merkmale der Ansprüche 1 und 9 gelöst. Bevorzugte Ausführungsformen sind in den Unteransprüchen definiert.

Die erfindungsgemässe vertikale Windkraftanlage umfasst eine Zelle mit einer Mehrzahl von jeweils unten und oben drehbar am Ende eines radialen Arms gelagerten vertikalen Flügeln, die innerhalb der Zelle auf einem konzentrischen Kreis um eine vertikale Maschinenachse herum verteilt angeordnet und gemeinsam auf diesem Kreis bewegbar und drehfest mit einer Hauptwelle verbunden sind, wobei die Flügel in der Zelle jeweils einzeln um eine, insbesondere durch ihr Inneres verlaufende, vertikale Drehachse drehbar gelagert sind, und wobei jedem der Flügel Mittel zugeordnet sind, mit welchen der Flügel während des Umlaufens um die Maschinenachse unabhängig von den anderen Flügeln in eine vorbestimmte und jederzeit änderbare Drehstellung um seine Drehachse gebracht werden kann, wobei die Arme jeweils einen fiktiven Ring oben und unten an der Zelle bilden.

Die Windkraftanlage kann zwei oder mehr längs einer vertikalen Maschinenachse übereinander angeordnete Zellen umfassen, wobei jede der Zellen eine Mehrzahl von vertikalen Flügeln umfasst, die innerhalb der Zelle auf einem konzentrischen Kreis um die Maschinenachse herum verteilt angeordnet und gemeinsam auf diesem Kreis bewegbar und drehfest mit einer Hauptwelle verbunden sind, und wobei die Flügel in der Zelle jeweils einzeln um eine, insbesondere durch ihr Inneres verlaufende, vertikale Drehachse drehbar gelagert sind. Sie zeichnet sich dadurch aus, dass jedem der Flügel Mittel zugeordnet sind, mit welchen der Flügel während des Umlaufens um die Maschinenachse unabhängig von den anderen Flügeln in eine vorbestimmte und jederzeit änderbare Drehstellung um seine Drehachse gebracht werden kann.

Die erfindungsgemäße vertikale Windkraftanlage ist dadurch gekennzeichnet, dass eine Windmesseinrichtung pro Ring außen an je einem der radialen Arme befestigt ist.

Jede Zelle kann einen konzentrisch zur Maschinenachse angeordneten ersten und zweiten Ring umfassen, welche Ringe die Zelle oben und unten begrenzen, und zwischen denen die Flügel der Zelle um 360 ° drehbar angeordnet sind.

Insbesondere sind die Flügel einer Zelle an ihren Enden auf dem ersten und zweiten Ring um 360° drehbar gelagert.

Insbesondere haben benachbarte Zellen jeweils einen Ring gemeinsam.

Insbesondere sind aber auch die Mittel zum Verändern der Drehstellung der Flügel auf den Ringen angeordnet.

Speziell umfassen die Mittel zum Verändern der Drehstellung der Flügel einen elektrisch oder hydraulisch angetriebenen Motor.

Die Drehbewegung des elektrisch oder hydraulisch angetriebenen Motors kann dabei beim elektrisch angetriebenen Motor über Zahnräder oder beim hydraulisch angetriebenen Motor direkt auf den zugehörigen Flügel übertragen werden.

Speziell ist der elektrisch oder hydraulisch angetriebene Motor mit der Motorachse in der Ringebene liegend angeordnet, und die Drehbewegung zwischen den Zahnrädern wird beim elektrischen Antrieb mittels eines Zahnriemens übertragen. Bei der Hydraulikvariante ist der Hydraulikmotor direkt, d.h. ohne Getriebe, mit der Flügeldrehachse verbunden.

Es ist aber auch denkbar, dass der elektrisch oder hydraulisch angetriebene Motor mit der Motorachse senkrecht zur Ringebene angeordnet ist, und dass zur Übertragung der Drehbewegung beim elektrischen Antrieb ein Winkelgetriebe zwischengeschaltet ist.

Eine andere Ausgestaltung der vertikalen Windkraftanlage nach der Erfindung ist dadurch gekennzeichnet, dass die unterste der Zellen einen vorbestimmten Abstand zum Boden aufweist, und dass die Hauptwelle zwischen der untersten Zelle und einem in Bodennähe angeordneten Maschinenhaus und an ihren Enden drehbar gelagert ist.

Speziell ist die Hauptwelle aus mehreren in axialer Richtung hintereinander angeordneten Abschnitten zusammengesetzt, und die Abschnitte sind untereinander über Flansche verbunden.

Insbesondere umfasst die Hauptwelle einen unteren zylindrischen Abschnitt, einen mittleren, sich nach oben konisch erweiternden Abschnitt und einen oberen zylindrischen Abschnitt, der einen grösseren Aussendurchmesser aufweist als der untere zylindrische Abschnitt.

Auf dem unteren zylindrischen Abschnitt ist vorzugsweise der Rotor eines elektrische Energie erzeugenden Generators drehfest angebracht.

Speziell ist zur drehbaren Lagerung der Hauptwelle am unteren Ende der Hauptwelle ein Lagerzapfen und am oberen Ende eine Stützrollenlaufbahn vorgesehen. Der Lagerzapfen ist mit einem Drucklager ausgestattet, das die unteren vertikalen Gravitationskräfte des Rotors übernimmt, und mit einem Radiallager, das die horizontalen unteren Real<tionswindl<räfte der Hauptwelle aufnimmt.

Schliesslich kann das obere Lager der Hauptwelle, das als Stützrollenlager ausgebildet ist und die vertikalen oberen Real<tionswindl<räfte der Hauptwelle aufnimmt, durch ein sich schräg nach unten erweiterndes Stützgestell auf ausserhalb der Maschinenachse angeordneten Fundamenten abgestützt sein, wobei die unteren Axial- und Radiallager der Hauptwelle im Generatorgehäuse untergebracht sind, welches innerhalb des im Stützgestell hängend angeordneten Maschinenhauses an den oberen Streben befestigt ist.

Gemäss einer weiteren Ausgestaltung der Erfindung ist an jeder der Zellen oben und unten jeweils eine Windmesseinrichtung zur Messung von Windrichtung und Windgeschwindigkeit angeordnet ist, welche vorzugsweise ein Ultraschall-Anemometer umfasst. Hiermit ist es möglich, die lokale Windeinwirkung auf jeden Flügel mit guter Genauigkeit zu bestimmen.

Weiterhin kann an jeder der Zellen oben und/ oder unten beim Flügellager eine Kraftmesseinrichtung für radiale und tangentiale Kraftrichtung vorgesehen sein, um die auftretenden Kräfte an den Flügeln zu bestimmen und mit zu berücksichtigen.

Das erfindungsgemässe Verfahren zum Betrieb einer vertikalen Windkraftanlage nach der Erfindung ist dadurch gekennzeichnet, dass mit der pro Ring außen an je einem der radialen Arme befestigten Windmesseinrichtung in jedem Zeitpunkt der Rotordrehung die genaue relative Windanströmung in Richtung und Geschwindigkeit bezogen auf den Arm und somit auf den Flügel bestimmt wird.

Die Drehstellung der einzelnen Flügel der Windkraftanlage um ihre Drehachse kann unabhängig voneinander nach Massgabe von Messwerten der Windgeschwindigkeit, der Windrichtung, der Drehzahl der Windkraftanlage und der Position der Flügel auf ihrem Umlauf um die Maschinenachse aktiv gesteuert werden.

Eine Ausgestaltung des erfindungsgemässen Verfahrens ist dadurch gekennzeichnet, dass für den Flügelwinkel, der die Auslenkung eines Flügels aus einer Grundposition tangential zum Umlaufkreis um die Maschinenachse beschreibt, virtuelle Kurvenscheiben bereitgestellt werden, welche jeweils den Verlauf des Flügelwinkels über der Position des Flügels auf dem Umlaufkreis festlegen, und dass die aktive Steuerung der einzelnen Flügel nach Massgabe der virtuellen Kurvenscheiben erfolgt.

Insbesondere wird zur Auswahl der für die aktive Steuerung der Flügel verwendeten virtuellen Kurvenscheiben fortlaufend die Schnelllaufzahl λ der Windkraftanlage bestimmt, wobei die Schnelllaufzahl λ das Verhältnis der Umfangsgeschwindigkeit der Flügel zur Windgeschwindigkeit angibt, und es wird nach Massgabe der bestimmten Schnelllaufzahl λ die für die aktive Steuerung der Flügel verwendete virtuelle Kurvenscheibe ausgewählt bzw. zwischen verschiedenen virtuellen Kurvenscheiben gewechselt.

Speziell sind die virtuellen Kurvenscheiben auf eine Nullposition der Windkraftanlage bezogen, und die Nullposition ist von der Windrichtung abhängig.

Insbesondere wird für jede der Zellen eine eigene, von der Höhe über dem Boden abhängige Windgeschwindigkeit bestimmt, und die Drehstellung der einzelnen Flügel der Zelle um ihre Drehachse wird nach Massgabe der für die Zelle ermittelten Windgeschwindigkeit aktiv gesteuert.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer vereinfachten Seitenansicht ein Ausführungsbeispiel der vertikalen Windkraftanlage nach der Erfindung mit zwei Zellen und der unteren Lagerung der Hauptwelle in einem hängend angebrachten Maschinenhaus;
- Fig. 2-4: in der Draufsicht (a) und in der Seitenansicht (b) die drei Ringe für die Lagerung der Flügel in der Anlage nach Fig. 1;
- Fig. 5: in einer Seitenansicht die Hauptwelle der Anlagen nach Fig. 1;
- Fig. 6: eine Seitenansicht eines Flügels mit oberem und unterem Lager der Anlagen gemäss Fig. 1;
- Fig. 7: in einer ausschnittweisen perspektivischen Darstellung zwei verschiedene Arten der Montage eines Elektromotors zur Flügelverstellung an dem die Flügel tragenden unteren Ring;
- Fig. 8: eine andere Ansicht eines horizontal unteren Ring montierten Elektromotors zur Flügelverstellung, der durch eine Abdeckung geschützt ist;
- Fig. 9: die berechnete optimale Flügelstellung über eine 360°-Drehung der Anlage bei einer Schnelllaufzahl von 0,4 im Diagramm (a) und in der axialen Draufsicht (b);
- Fig. 10: entschärfte Flügelsteuerungskurven, die den technischen Grenzen der Antriebsmittel Rechnung tragen;
- Fig. 11: ein Blockschema der elektromechanischen Steuerung der Flügelstellung gemäss einen Ausführungsbeispiel der Erfindung; und
- Fig. 12: ein Blockschema der elektrohydraulischen Steuerung der Flügelstellung gemäss einen anderen Ausführungsbeispiel der Erfindung.

### WEGE ZUR AUSFÜHRUNG DER ERFINDUNG

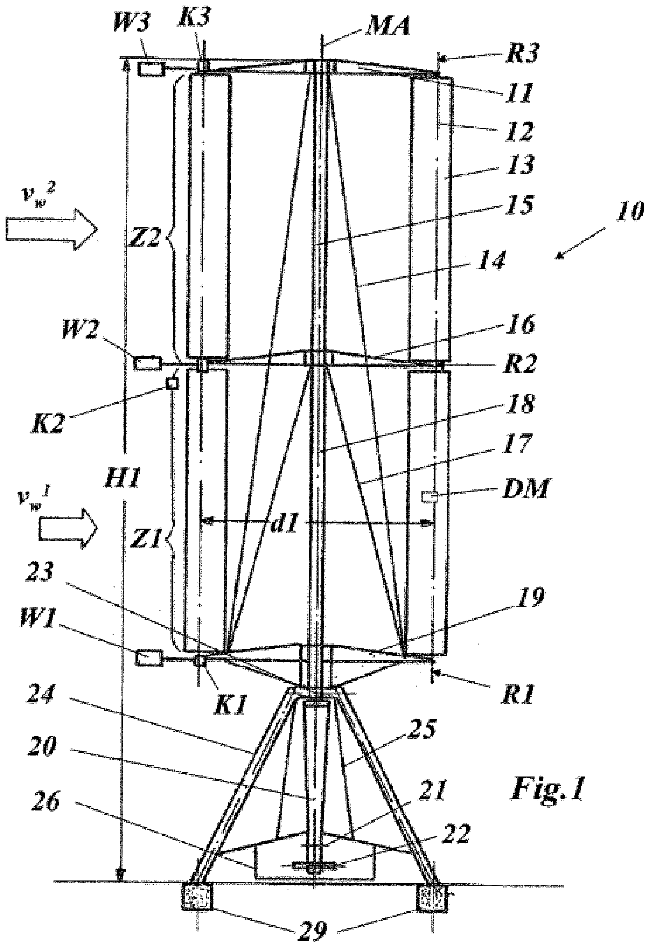

In Fig. 1 ist in einer vereinfachten Seitenansicht ein Ausführungsbeispiel der vertikalen Windkraftanlage nach der Erfindung wiedergegeben. Die Windkraftanlage 10 der Fig. 1 umfasst zwei Zellen Z1 und Z2, die entlang einer vertikalen Maschinenachse MA übereinander angeordnet sind. Jede der Zellen Z1, Z2 hat zwei horizontale, konzentrisch zur Maschinenachse MA positionierte Ringe 11, 16 bzw. 16, 19, zwischen denen eine Mehrzahl (im Beispiel 3) von vertikalen Flügeln 13 jeweils um eine eigene Drehachse 1 2 drehbar gelagert sind. Der mittlere Ring 16 ist dabei beiden Zellen Z1 und Z2 gleichermassen zugeordnet.

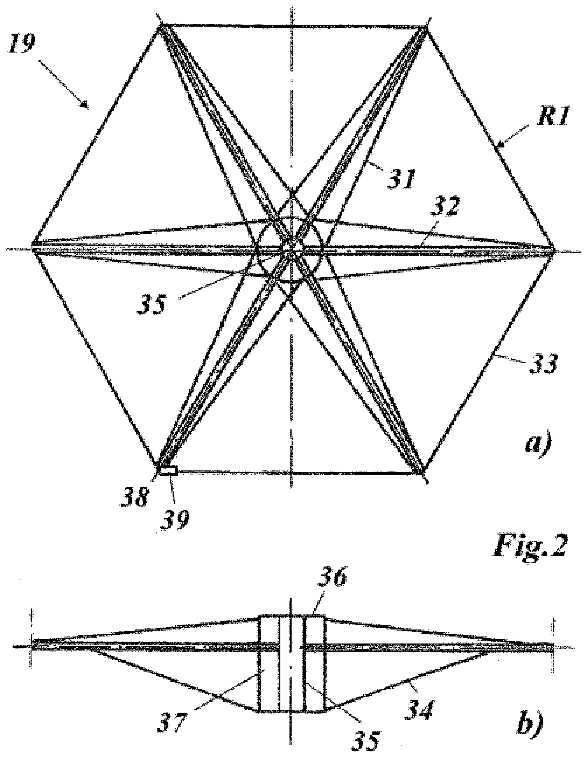

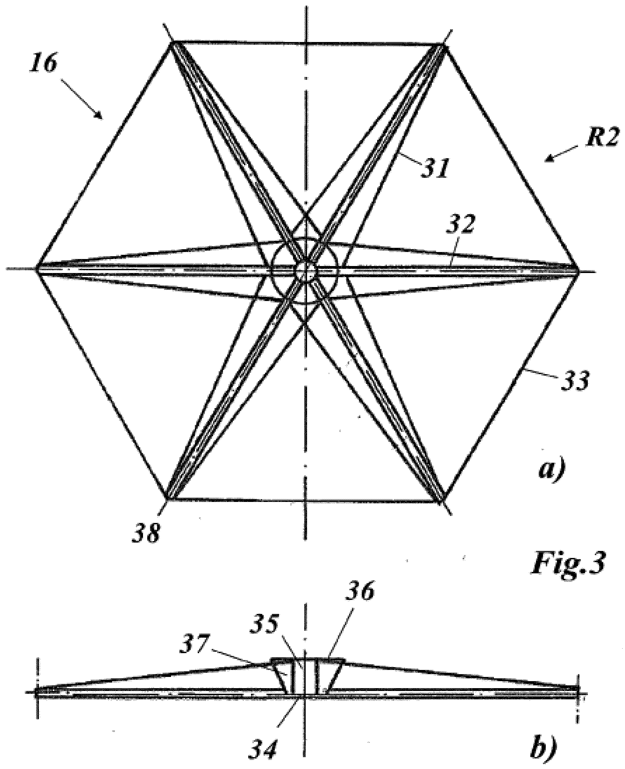

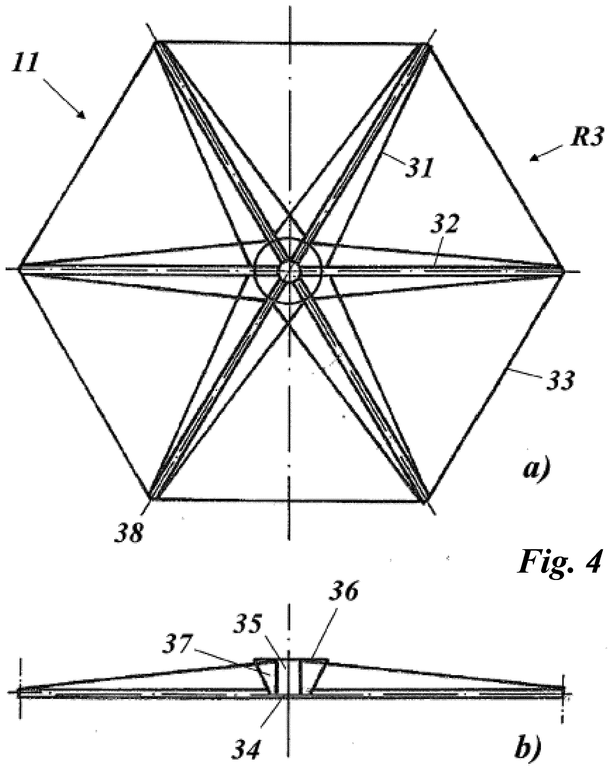

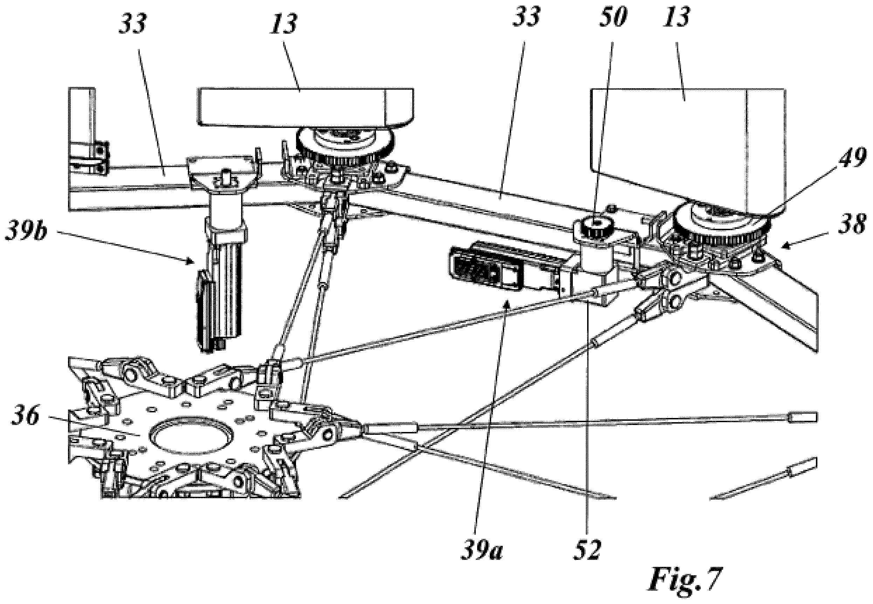

Der Aufbau der Ringe 11, 16 und 19 ergibt sich aus den Fig. 2, 3 und 4. Jeder der Ringe 11, 16 und 19 ist als gleichseitiges Dreieck oder regelmässiges Vieleck ausgebildet, in dessen Ecken die Flügel 13 mittels eines entsprechenden Lagersupports 38 gelagert sind (siehe auch Fig. 7). Der Umfang wird aus Stangen 33 gebildet, die mit einem im Zentrum befindlichen vertikalen Rohr 35 durch radial verlaufende Stangen 31 und Rohre 32 verbunden sind. Auf der Unterseite der Ringe dienen Flacheisen 34 der Zugabstrebung. Um das zentrale Rohr 35 herum sind radiale Rippen 37 angeordnet, die zugleich an den Enden des Rohres 35 ausgebildete Flansche 36 stützen.

Die Zellen Z1, Z2 mit ihren Flügeln 13 sind über zentrale Rohre 15 und 18 mit einer unterhalb der Zellen drehbar gelagerten vertikalen Hauptachse 20 drehfest verbunden, so dass sie zusammen mit der Hauptachse 20 um die Maschinenachse MA rotieren können. Die Hauptachse 20 ist am oberen Ende in einem Lagerhalter 23 mit Stützrollen drehbar gelagert, der über ein Gestell von schräg nach unten gespreizten Rohren 24 auf aussen liegenden Fundamenten 29 abgestützt ist. Im Ausführungsbeispiel der Fig. 1 sind die unteren Vertikal- und Radiallager im Generatorgehäuse untergebracht, welches im Maschinenhaus 26 befestigt ist, das am Gestell 24 hängend angeordnet ist. Auf diese Weise kann mehr Gewicht in die aussen liegenden Fundamente 29 eingeleitet werden, wodurch sich das Standmoment der Gesamtkonstruktion erhöht. Die Höhe H1 kann beispielsweise 75 m oder auch mehr (z.B. über 200 m) betragen. Der Durchmesser d1 des Kreises, auf dem sich die Flügel 13 mit ihren Drehachsen 12 bewegen, beträgt beispielsweise 20 m. Jede der Zellen Z1, Z2 sieht aufgrund der unterschiedlichen Höhe eine eigene Windgeschwindigkeit v_{w}¹ und v_{w}².

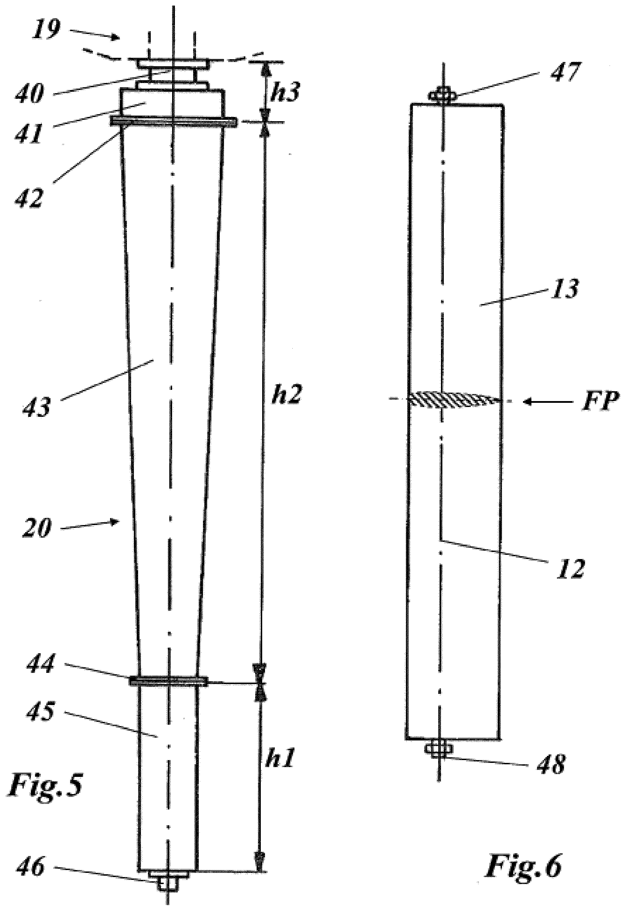

Die Hauptachse 20 besteht im Beispiel gemäss Fig. 5 aus einem unteren zylindrischen Abschnitt 45 kleineren Durchmessers, einem mittleren, sich nach oben zu konisch erweiternden Abschnitt 43 und einem oberen zylindrischen Abschnitt 41 grösseren Durchmessers. Die Abschnitte 41, 43 und 45 sind durch Flansche 42 und 44 fest miteinander verbunden. Am oberen Ende des oberen zylindrischen Abschnitts 41 ist eine Stützrollenlaufbahn 40 angebracht, am unteren Ende des unteren zylindrischen Abschnitts 45 ein unterer Lagerzapfen 46. Die Abschnitte haben die Längen h1, h2 und h3 von z.B. 4 m, 11 m und 0,5 m.

Wie in Fig. 1 zu erkennen ist, trägt der untere zylindrische Abschnitt 45 den Rotor 22 eines Generators sowie eine Bremse 21, die beide im Maschinenhaus 26 untergebracht sind. Zellen Z1 und Z2 zusammen mit der Hauptachse bilden den um die Maschinenachse MA drehenden Rotor der Windkraftanlage.

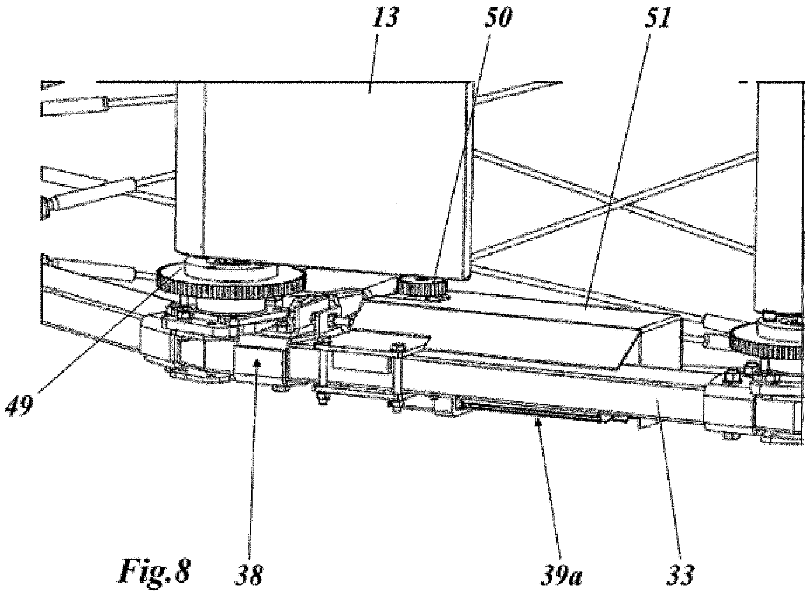

In Fig. 2(a) ist beispielhaft die Lage eines der jedem Flügel 13 zugeordneten Aktuatoren 38 eingezeichnet. Der Aktuator 39 ist in diesem Fall parallel zur Stange 33 des Ringes 19 liegend in unmittelbarer Nähe des Lagersupports 38 des entsprechenden Flügels angeordnet. Dies ist noch deutlicher im vergrösserten Ausschnitt der Fig. 7 zu erkennen, wo der eine der beiden eingezeichneten Aktuatoren, Aktuator 39a, diese parallele Lage zur Stange 33 einnimmt. Der betreffende Flügel 13 ist an seiner Drehachse oberhalb des Lagersupports 38 mit einem ersten Zahnrad 49 versehen. Der Aktuator 39a, in diesem Fall ein elektrischer Servomotor, wirkt über eine Winkelgetriebe 52 auf ein zweites Zahnrad 50, das sich auf derselben Höhe befindet wie das erste Zahnrad 49 und mit diesem über einen (nicht dargestellten) Zahnriemen antriebsmässig verbunden ist. Soll der Einsatz eines Winkelgetriebes vermieden werden, kann der Aktuator (39b) auch vertikal eingebaut werden, erzeugt dann allerdings mehr Strömungswiderstand. Der liegend angeordnete Aktuator 39a kann gemäss Fig. 8 auf einfache Weise mit einer Abdeckung 51 versehen werden, um ihn vor Witterungseinflüssen zu schützen.

Die Aktuatoren 39 bzw. 39a, b werden über entsprechende Zuleitungen von einer zentralen Versorgungseinheit mit Energie versorgt und über Steuersignale entsprechend den Vorgaben einer Steuerung angesteuert. Werden anstelle der elektrischen hydraulische Aktuatoren (Motore) eingesetzt, erfolgt die Versorgung durch entsprechende Hydraulikleitungen aus einer zentralen Hydraulikeinheit.

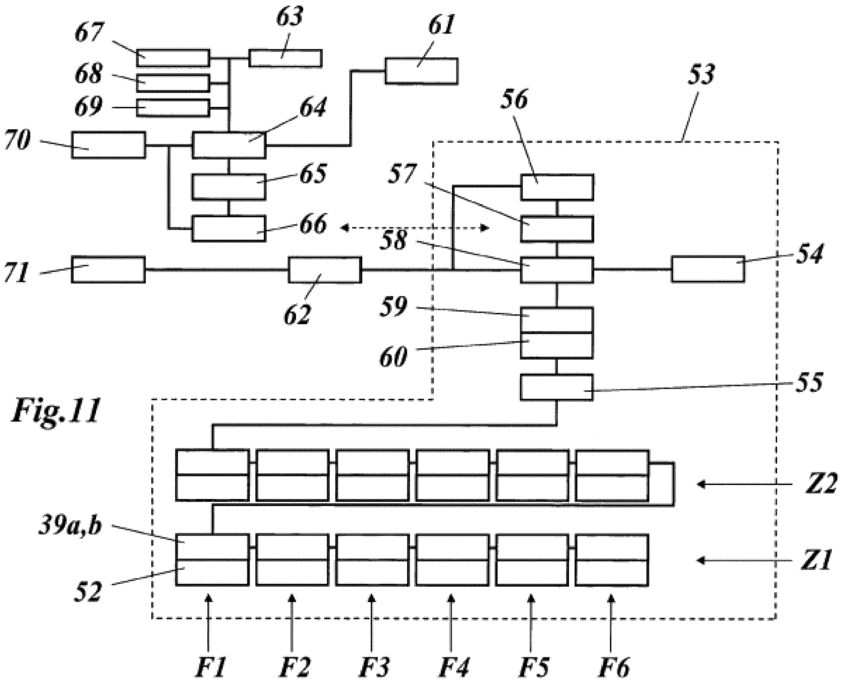

Einen Überblick über das Konzept der aktiven Flügelsteuerung gibt das Blockschaltbild auf Fig. 11.

Die Flügel 13 bzw. F1-F6 der Zellen Z1 und Z2 werden aktiv mittels Aktuatoren 39a (über Winkelgetriebe 52) oder 39b (direkt) um ihre Längsachse gedreht. Jeder beliebige Flügelwinkel (Winkel zwischen Tangentiale am Umlaufkreis des Rotors und Sehnenlinie des Flügels) kann für jeden Flügel an jeder Position auf dem Umlaufkreis individuell eingestellt werden.

Aufgabe der aktiven Flügelsteuerung ist es, mit allen (im Beispiel 12) Flügeln 13 bzw. F1-F6 in beiden Zellen einen mit der Rotorposition variierenden Flügelwinkel zu fahren. Je nach Windgeschwindigkeit und Drehzahl des Rotors wird ein anderer Verlauf des Flügelwinkels über der Rotorposition gefahren. Hierzu werden verschiedene virtuelle Kurvenscheiben erzeugt und in einem Speicher abgelegt. Der Flügelwinkel folgt dann dem Randverlauf der ausgewählten virtuellen Kurvenscheibe. Der Nullpunkt der Rotorposition ist dabei abhängig von der Windrichtung. Windrichtung und Windgeschwindigkeit werden von einem Windgeschwindigkeitsaufnehmer 67 und einem Windrichtungsaufnehmer 68 gemessen.

Der Windmessung kommt bei der vorliegenden Anlage gemäss Fig. 1 eine besondere Bedeutung zu. Eine vertikale Windturbine 10 der in Fig. 1 gezeigten Art hat über der ganzen Wirkhöhe des Rotors gleichförmig gestaltete Flügel 13, die während jeder Rotorumdrehung individuell optimal gesteuert werden können. Der Anstellwinkel des Flügels 13 zur relativen Windanströmung soll in jedem Zeitpunkt der Rotorumdrehung gesteuert werden können. Die Flügel "fliegen" bei Rotordrehung quasi auf einer kreisförmigen Bahn, mit dem Rotorradius, ums Zentrum des Rotors bzw. die Maschinenachse MA und erzeugen dabei einen Auftrieb in radialer Richtung und einen Vortrieb in tangentialer Richtung. Der Vortrieb soll jederzeit so optimiert werden können, dass die Turbine 10 einen maximalen Antrieb erfährt.

Aus Gründen der statischen und dynamischen Flügelbelastung ist der Rotor über der Wirkhöhe je nach Grösse der Windturbine in ein bis vier Zellen (zwei Zellen Z1 und Z2 im Beispiel der Fig. 1) aufgeteilt. Eine Zelle Z1, Z2 enthält je drei Flügel 13, die unten und oben jeweils drehbar am Ende eines radialen Arms gelagert und so fest mit dem Zentrum des Rotors verbunden sind. Die drei Arme bilden je einen fiktiven Ring oben und unten an jeder Zelle.

Da alle Rotorzellen mit dem Rotor fest verbunden sind, drehen sie auch immer gleichschnell wie der Rotor. Die Windrichtung und die Windgeschwindigkeit können sich aber über der Wirkhöhe des Rotors stark ändern, besonders bei grossen (hohen) Turbinen. Um eine optimale Vortriebssteuerung zu gewährleisten, müsste man in jedem Zeitpunkt der Rotorumdrehung die Geschwindigkeit und Richtung der relativen Windanströmung jedes Flügels genau kennen. Mit einer statischen Windmessung könnte vertikal und mit Abstand zum Rotor die Windgeschwindigkeit und die Windrichtung über der Höhe gemessen werden (Windmessmast). Da der Windmessmast fest und in einigem Abstand zur Turbine steht, würde er bei ungünstiger Windrichtung im Windschatten der Turbine stehen und auch wegen des Abstands ungenaue und nicht der Realität an den Flügeln entsprechende Messergebnisse liefern.

Es wird deshalb vorgeschlagen, je eine Windmesseinrichtung W1-W3 (Fig. 1) pro Ring aussen an je einem Ringarm zu befestigen. Die Windmesseinrichtung W1-W3 wird nun in jedem Zeitpunkt der Rotordrehung die genaue relative Windanströmung in Richtung und Geschwindigkeit bezogen auf den Arm und somit auch auf den Flügel bestimmen. Die Windmesseinrichtung sollte vorzugsweise keine mechanisch-dynamischen Messkomponenten enthalten wie Windfahne und Windrad, sondern soll Windrichtung und Windgeschwindigkeit mittels Ultraschall messen (Ultraschall-Anemometer), da mechanische Messkomponenten durch die Zentrifugalbeschleunigung am Rotor Fehlresultate zeigen könnten. Die Windmesseinrichtung W1-W3 muss einen genügenden Abstand zum Armende haben, um nicht vom Luftwirbelbereich des Armendes beeinflusst zu sein.

Es ist bekannt, dass die Windrichtung und die Windgeschwindigkeit über der Wirkhöhe eines Rotors stark variieren können (Windscherungen und Turbulenzen). Falls solche Phänomene nicht örtlich und zeitlich genau genug gemessen werden können, um die Flügel 13 optimal zu steuern, wird die Turbine einen erheblich geringeren aerodynamischen Wirkungsgrad aufweisen. Wenn die Messung nun bei jeder Zelle Z1, Z2 oben und unten am Umfang dynamisch und zeitnah erfolgt, kann auch jeder Flügel immer auf den optimalen Relativanstellwinkel gesteuert werden. U m die Windverhältnisse in der Mittelhöhe des Flügels zu bestimmen, sind die jeweiligen Windmessungen oben und unten am Flügel zu mitteln, um daraus das Flügelsteuersignal zu bilden. Aus der Messung der Relativanströmung kann über die Rotorumfangsgeschwindigkeit jederzeit auch die absolute Windgeschwindigkeit und Windrichtung trigonometrisch berechnet werden. Anhand dieser Messungen können sehr zeitnah die optimale Schnelllaufzahl der Turbine und der optimale dazu passende Flügelanstellwinkel bestimmt werden.

Mit der Messeinrichtung können auch kurzzeitig hohe örtliche Turbulenzen festgestellt werden, die zu einer Flügel- und Turbinen-Überlastung führen könnten. Daraus kann dann auch eine allfällige entlastende Flügelverstellung oder vollständige Flügelabschaltung (Freigabe) erfolgen. Die Messungen mit den Windmesseinrichtungen W1-W3 an je einem Arm pro Ring erlauben es, die Zellen mit deren Flügeln unabhängig voneinander individuell zu steuern.

Es wird weiter vorgeschlagen, an jeder Zelle Z1, Z2 am unteren oder oberen Ring an je einem Arm beim Flügellager eine Kraftmesseinrichtung K1-K3 für radiale und tangentiale Kraftrichtung zu installieren. Mit der Tangentialkraftmessung kann zusammen mit der Windmesseinrichtung W1-W3 der Flügelvortrieb und somit der Turbinenwirkungsgrad optimiert werden. Die Signale dieser beiden Messeinrichtungen W1-W3 und K1-K3 sollen mittels eines selbstlernenden Steuerungsprogramms ständig den Wirkungsgrad der Turbine adaptiv verbessern.

Das radiale Kraftmesssignal soll zusammen mit dem tangentialen Kraftmesssignal ständig den Belastungsverlauf des Flügels überwachen. Mit dieser Messung kann die Häufung und Intensität der Flügelbeanspruchung und damit auch die Restlebensdauer der Flügel bestimmt werden.

Als Alternative oder Ergänzung der vorbeschriebenen Kraftmessung zur Bestimmung der Flügelbeanspruchung könnte auch in der Flügelmitte auf der Oberfläche ein Dehnmess- streifen (beispielhaft für einen Flügel 13: DM in Fig. 1) angebracht werden, der zusammen mit einem Messsystem die Häufung und Intensität der Biegespannungen im Flügel 13 misst. Aus diesen Messungen könnte dann die Restlebensdauer der Flügel 13 bestimmt werden. Das Verfahren kann insofern kompliziert sein, als das Messsignal vom rotierenden Flügel an den Ringarm übertragen werden muss. Die Dehnmessstreifen-Einrichtung soll aber ausschliesslich nur zur Messung der Flügelbeanspruchung, nicht aber zur Optimierung des Flügelvortriebs verwendet werden.

Das Grundkonzept der aktiven Flügelsteuerung ist dem Blockschaltbild in Fig. 11 zu entnehmen. Die Komponenten, welche mit einer gestrichelten Linie umrahmt sind (Rotorblock 53 in Fig. 11), werden in einem Schaltschrank auf dem Rotor montiert. Die Kommunikation mit der Steuerung auf dem Turm und die Datenerfassung laufen über eine Wi-Fi-Verbindung mit entsprechenden Wi-Fi-Transmittern 57 und 66. Die Leistungsversorgung aus einer Drehstrom-Spannungsversorgung 71 (3x400VAC, 1xNullleiter und 1xErdung) läuft über einen Schleifring 62. Die auf dem Rotor befindlichen Funktionsblöcke werden über eine 24VDC-Spannungsversorgung 56 versorgt. Eine analoge 24VDC-Spannungsversorgung 65 ist auch ausserhalb des Rotors vorgesehen.

Die virtuellen Kurvenscheiben (verschiedene Flügelwinkelverläufe mit der Rotorposition) werden auf dem Rotor (Motioncontroller 58) abgelegt. Sie können jedoch im Betrieb über die Wi-Fi-Verbindung abgeändert werden. Windgeschwindigkeit, Windrichtung und Drehzahl des Rotors werden auf dem Turm (nicht drehend) über die I/O einer mit einem Computer 70 zusammenarbeitenden Speicherprogrammierbaren Steuerung (SPS) 64 verarbeitet. Welche virtuelle Kurvenscheibe genommen werden muss, wird über die Wi-Fi-Verbindung an den Motioncontroller 58 auf dem Rotor übertragen. Auf dem Rotor sowie auch auf dem Turm sind I/O verfügbar.

Die 6 Aktuatoren 39a bzw. 39b folgen im einfachsten Fall der gleichen Kurvenscheibe, jedoch mit einem Winkelversatz von 120° (bei z.B. 3 Flügeln pro Zelle). Der Nullwert der Rotorposition ist abhängig von der Windrichtung. Unterscheiden sich bei höheren Anlagen und/oder mehr als zwei Zellen die Windgeschwindigkeiten für die Zellen erheblich voneinander, wird für jede der Zellen nach Massgabe der zugehörigen Windgeschwindigkeit eine eigene virtuelle Kurvenscheibe ausgewählt. Es wird also für jede der Zellen Z1, Z2 eine eigene, von der Höhe über dem Boden abhängige Windgeschwindigkeit (v_{w}) bestimmt, und die Drehstellung der einzelnen Flügel 13, F1-F6 der Zelle nach Massgabe der für die Zelle ermittelten Windgeschwindigkeit (v_{w}) aktiv gesteuert. Da die Abhängigkeit der Windgeschwindigkeit von der Höhe über dem Boden einer Standardkurve folgt, reicht es aus, die Windgeschwindigkeit in einer Höhe zu messen, um daraus die Werte für andere Höhen zu bestimmen. Alle Zellen haben dieselbe Drehzahl um die Maschinenachse MA, aber wegen der unterschiedlichen Höhe unterschiedliche Windgeschwindigkeiten. Entsprechend ergeben sich unterschiedliche Schnelllaufzahlen, die dann über die gesamte Anlage gemittelt eine maximale Energieerzeugung gewährleisten sollen.

Der Schaltschrank mit dem Motioncontroller 58 befindet sich auf dem Rotor. Die Rotorposition sollte auch auf dem Rotor abgegriffen werden. Hierzu kann ein entsprechender Drehgeber eingesetzt werden. Im Beispiel der Fig. 11 ist stattdessen jedoch ein Geber für die Nullposition 54 vorhanden. Die Rotordrehzahl wird auf dem Turm ermittelt. Die daraus resultierenden Schrittimpulse werden über SPS 64 eingelesen und über die Wi-Fi-Verbindung an den Motioncontroller 58 auf dem Rotor übermittelt.

Die aktive Flügelsteuerung erhält mehrere Eingangssignale direkt von einem Messsystem, das den Windgeschwindigkeitsaufnehmer 67, den Windrichtungsaufnehmer 68 und ggf. einen Rotordrehmomentaufnehmer 69 umfasst. Zusätzlich werden Impulse 63 für die Drehzahl eingespiesen. Anhand dieser Eingangssignale bestimmt die Flügelsteuerung 64, wie die einzelnen Flügel gesteuert werden müssen (welche Kurvenscheibe wird verwendet, wo ist der Null-Punkt der Rotorposition). Die Steuersignale aus dem Motioncontroller 58 gehen über eine Powermodul 59 an ein Abgangsmodul 60 und von dort über eine Verteilbox 55 an die einzelnen Aktuatoren 39a bzw. 39b.

Der Flügelwinkelverlauf wird periodisch neu ausgewählt (verschiedene Kurvenscheiben). Die Windrichtung legt die Nullposition der Rotorposition fest. Von den für die Regelung benötigten Eingangssignalen wird jeweils der Median über eine bestimmte Zeit berechnet. Sowohl die Refresh-Zeit als auch das Zeitfenster für die Mittelung der Regelparameter sollten frei wählbar sein. Eine spezielle Steuerung 61 kann Befehle für die Abschaltung der Anlage bzw. die Reduktion der Drehzahl geben.

Die max. Anzahl der verschiedenen Flügelwinkelverläufe (virtuelle Kurvenscheiben), welche definiert werden können, ist durch den Motioncontroller 58 begrenzt und kann z.B. 99 betragen. Welcher Flügelwinkelverlauf verwendet wird, ist abhängig vom Betriebszustand und der Schnelllaufzahl λ der Turbine. Die Schnelllaufzahl wird in an sich bekannter Weise berechnet aus der Windgeschwindigkeit v_{w} und der Rotordrehzahl (bzw. Rotorumfangsgeschwindigkeit).

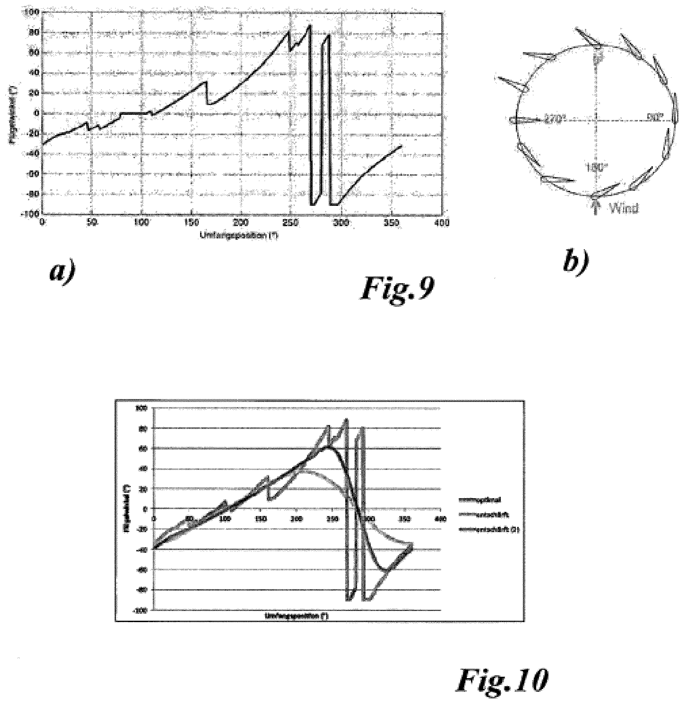

Der theoretisch optimale Flügelwinkelverlauf für einen Flügel 1 3 wurde mithilfe eines analytischen Modells für verschiedene Schnelllaufzahlen berechnet. Ein Beispiel für eine Schnelllaufzahl von 0,4 (a) zusammen mit einer Skizze der physikalischen Positionen der Blätter jede 30° (b) ist in Fig. 9 gezeigt.

Es ist zu beachten, dass die maximalen Beschleunigungen aus Fig. 9 in der Realität nicht erreicht werden können. Die optimalen Flügelwinkelverläufe werden deshalb entschärft und die resultierenden Charakteristiken mit typischen Eigenschaften verfügbarer Antriebsmotoren verglichen. Ein Beispiel für zwei unterschiedliche Entschärfungen zeigt Fig. 10.

Die Flügel werden einer virtuellen Leitachse entsprechend positioniert. Die Leitachse wird durch einen NULL-Impuls (Null-Position 54) und die Drehzahl bestimmt. Die SPS 64 speichert mit einer vorbestimmten Frequenz die aktuelle Windgeschwindigkeit, die Rotordrehzahl und die Windrichtung. Periodisch wird der Median von der Windgeschwindigkeit und Rotordrehzahl berechnet. Daraus wird die gemittelte Schnelllaufzahl λ über das letzte Zeitfenster berechnet und die Kurvenscheibe ausgewählt. Der Median der Windrichtung wird ebenfalls periodisch berechnet. Daraus wird die NULL-Position der Kurvenscheibe bestimmt.

Ist die Schnelllaufzahl der Turbine < 0,4 wird ein konstanter Flügelwinkelverlauf verwendet, um die Drehzahl zu erhöhen. Sobald die Schnelllaufzahl > 0,4 ist, befindet sich die Turbine im Betrieb.

Beim Herunterfahren wird die Windturbine vom Generator gebremst, um die Drehzahl auf 0 zu bringen. Die Flügelsteuerung erhält von der Steuerung 61 der Anlage ein Signal, dass der Betriebszustand Herunterfahren erreicht wurde und die Flügelantriebe 39a bzw. 39b werden stromlos gemacht oder bei hydraulischem Antrieb die Hydraulikmotoren freigeschaltet.

Die Rotordrehzahl ist 0 und die Bremsen der Windturbine sind geschlossen. Die Flügelsteuerung wird nicht ausgeschaltet, damit verliert diese auch die Rotorposition nicht. Die Motoren sind stromlos oder die Hydraulikmotore öldruckfrei. Damit richten die Flügel 13 sich mit dem Wind aus.

Die Windturbine wird mit der Bremse 21 so schnell wie möglich abgebremst. Die Flügel 13 werden bei Betätigung des Not-Aus physikalisch stromlos bzw. öldruckfrei gemacht.

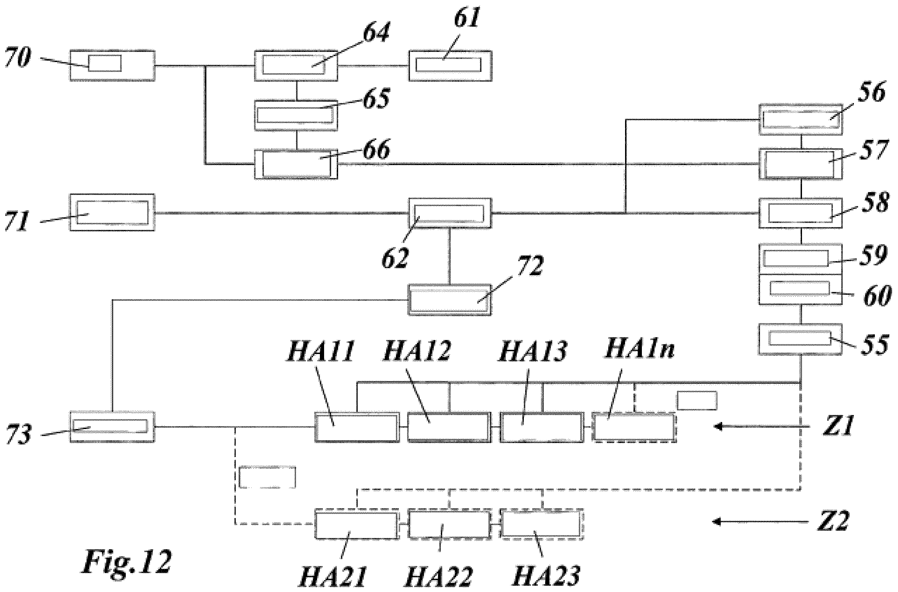

Ein zu Fig. 11 analoges Blockschaltbild für die elektrohydraulische Steuerung der Flügel in den Zellen ist in Fig. 12 wiedergegeben. Die zur Betätigung der einzelnen Flügel vorgesehenen Hydraulik-Aktuatoren HA11-HA1n und HA21-HA23, die mit den notwendigen Ventilen und einer Freischaltung ausgestattet sind, werden über in den Zellen verlegte Hydraulikleitungen von einem (oder mehreren) zentralen (im Zentrum des Rotors angeordneten) Hydraulik-Aggregat(en) 73 mit Öldruck versorgt. Das oder die Hydraulik-Aggregate 73 erhalten ihren Betriebsstrom von einer eigenen Spannungsversorgung 72, die an die Energieübertragung (Schleifring 62) angeschlossen ist.

Die Hydraulik-Aktuatoren HA11-HA1n und HA21-HA23 können besonders kompakt ausgeführt sein und hohe Stellkräfte abgeben. Darüber hinaus lässt sich sehr leicht durch Öffnen der entsprechenden Ventile der notwendige Freilauf der Flügel sicherstellen.

### Bezugszeichenliste

| | | | |
|---|---|---|---|
| 10 | Windkraftanlage (vertikal) | 52 | Winkelgetriebe |
| 11 | oberer Ring | 53 | Rotorblock |
| 12 | Drehachse | 54 | Null-Position |
| 13 | Flügel | 55 | Verteilbox |
| 14,17 | Stange | 56 | 24VDC-Spannungsversorgung |
| 15,18 | Rohr | 57 | Wi-Fi-Transmitter |
| 16 | mittlerer Ring | 58 | Motioncontroller |
| 19 | unterer Ring | 59 | Powermodul |
| 20 | Hauptwelle | 60 | Abgangsmodul |
| 21 | Bremse | 61 | Steuerung |
| 22 | Rotor (Generator) | 62 | Schleifring |
| 23 | Lagerhalter | 63 | Impuls für Drehzahl |
| 24 | Rohr | 64 | SPS |
| 25 | Stange | 65 | 24VDC-Spannungsversorgung |
| 26 | Maschinenhaus | 66 | WiFi-Transmitter |
| 29 | Fundament | 67 | Windgeschwindigkeitsaufnehmer |
| 31,33 | Stange | 68 | Windrichtungsaufnehmer |
| 32 | Rohr | 69 | Rotordrehmomentaufnehmer |
| 34 | Flach | 70 | Computer |
| 35 | Rohr | 71,72 | Drehstrom-Spannungsversorgung |
| 36 | Flansch | 73 | Hydraulik-Aggregat |
| 37 | Rippe | d1 | Durchmesser |
| 38 | Lagersupport | DM | Dehnungsmessstreifen |
| 39 | Aktuator (Flügel) | FP | Flügelprofil |
| 39a,b | Servomotor | F1-F6 | Flügel |
| 40 | Stützrollenlaufbahn | HA11-HA1n | Hydraulik-Aktuator (integriert mit Ventilen und Freischaltung) |
| 41 | oberer Abschnitt (zylindrisch) | | |
| 42,44 | Flansch | HA21-HA23 | Hydraulik-Aktuator (integriert mit Ventilen und Freischaltung) |
| 43 | mittlerer Abschnitt (konisch) | | |
| 45 | unterer Abschnitt (zylindrisch) | H1 | Gesamthöhe |
| 46 | unterer Lagerzapfen | h1-h3 | Höhe |
| 47,48 | Lager (z.B. Pendelrollen- oder Pendelkugellager | K1-K3 | Kraftmesseinrichtung |
| | | MA | Maschinenachse |
| 49,50 | Zahnrad | W1-W3 | Windmesseinrichtung |
| 51 | Abdeckung | Z1,Z2 | Zelle |

## Patentansprüche

1. Vertikale Windkraftanlage (10), umfassend eine Zelle mit einer Mehrzahl von jeweils unten und oben drehbar am Ende eines radialen Arms gelagerten vertikalen Flügeln (13; F1-F6), die innerhalb der Zelle auf einem konzentrischen Kreis um eine vertikale Maschinenachse (MA) herum verteilt angeordnet und gemeinsam auf diesem Kreis bewegbar und drehfest mit einer Hauptwelle (20) verbunden sind, wobei die Flügel (13; F1-F6) in der Zelle jeweils einzeln um eine, insbesondere durch ihr Inneres verlaufende, vertikale Drehachse (12) drehbar gelagert sind, und wobei jedem der Flügel (13; F1-F6) Mittel (39; 39a, b; 49, 50; 52) zugeordnet sind, mit welchen der Flügel (13; F1-F6) während des Umlaufens um die Maschinenachse (MA) unabhängig von den anderen Flügeln in eine vorbestimmte und jederzeit änderbare Drehstellung um seine Drehachse (12) gebracht werden kann, wobei die Arme jeweils einen fiktiven Ring oben und unten an der Zelle bilden, **dadurch gekennzeichnet, dass** eine Windmesseinrichtung (W1-W3) pro Ring außen an je einem der radialen Arme befestigt ist.

2. Vertikale Windkraftanlage nach Anspruch 1, **dadurch gekennzeichnet, dass** die Windmesseinrichtung (W1-W3) einen genügenden Abstand zum Armende hat, um nicht vom Luftwirbelbereich des Armendes beeinflusst zu sein.

3. Vertikale Windkraftanlage nach Anspruch 1 oder 2, **dadurch gekennzeichnet, dass** die Windmesseinrichtungen (W1-W3) an je einem Arm pro Ring es erlauben, die Flügel (13; F1-F6) unabhängig voneinander individuell zu steuern.

4. Vertikale Windkraftanlage nach wenigstens einem der oben genannten Ansprüche, **dadurch gekennzeichnet, dass** die Windmesseinrichtung (W1-W3) dazu eingerichtet ist, zu jedem Zeitpunkt der Rotordrehung die genaue relative Windanströmung in Richtung und Geschwindigkeit bezogen auf den Arm und somit auch auf den Flügel (13; F1-F6) zu bestimmen.

5. Vertikale Windkraftanlage nach wenigstens einem der oben genannten Ansprüche, **dadurch gekennzeichnet, dass** die Windmesseinrichtung (W1-W3) zur Messung von Windrichtung und Windgeschwindigkeit vorzugsweise ein Ultraschall-Anemometer umfasst.

6. Vertikale Windkraftanlage nach wenigstens einem der oben genannten Ansprüche, **gekennzeichnet durch** eine aktive Flügelsteuerung, die mehrere Eingangssignale direkt von einem Messsystem erhält, das einen Windgeschwindigkeitsaufnehmer (67), einen Windrichtungsaufnehmer (68) und/oder einen Rotordrehmomentaufnehmer (69) umfasst.

7. Vertikale Windkraftanlage nach wenigstens einem der oben genannten Ansprüche, **dadurch gekennzeichnet, dass** die Mittel (39; 39a, b; 49, 50; 52) zum Verändern der Drehstellung der Flügel (13, F1-F6) einen elektrisch oder hydraulisch angetriebenen Motor (39a, b) umfassen.

8. Vertikale Windkraftanlage nach wenigstens einem der oben genannten Ansprüche, **dadurch gekennzeichnet, dass** bei der Zelle unten und/oder oben beim Flügellager der Flügel (13; F1-F6) eine Kraftmesseinrichtung (K1-K3) für radiale und tangentiale Kraftrichtung vorgesehen ist, um die auftretenden Kräfte an den Flügeln zu bestimmen und mit zu berücksichtigen.

9. Verfahren zum Betrieb einer vertikalen Windkraftanlage (10) nach wenigstens einem der oben genannten Ansprüche, wobei die Drehstellung der einzelnen Flügel (13, F1-F6) der Windkraftanlage um ihre Drehachse (12) unabhängig voneinander nach Massgabe von Messwerten der Windgeschwindigkeit (v_{w}), der Windrichtung, der Drehzahl der Windkraftanlage (10) und der Position der Flügel auf ihrem Umlauf um die Maschinenachse (MA) aktiv gesteuert wird, **dadurch gekennzeichnet, dass** mit der pro Ring außen an je einem der radialen Arme befestigten Windmesseinrichtung (W1-W3) in jedem Zeitpunkt der Rotordrehung die genaue relative Windanströmung in Richtung und Geschwindigkeit bezogen auf den Arm und somit auf den Flügel (13, F1-F6) bestimmt wird.

10. Verfahren nach Anspruch 9, **dadurch gekennzeichnet, dass** für den Flügelwinl<el, der die Auslenkung eines Flügels (13, F1-F6) aus einer Grundposition tangential zum Umlaufkreis um die Maschinenachse (MA) beschreibt, virtuelle Kurvenscheiben bereitgestellt werden, welche jeweils den Verlauf des Flügelwinl<els über der Position des Flügels (13, F1-F6) auf dem Umlaufkreis festlegen, und dass die aktive Steuerung der einzelnen Flügel (13, F1-F6) nach Massgabe der virtuellen Kurvenscheiben erfolgt.

11. Verfahren nach Anspruch 10, **dadurch gekennzeichnet, dass** zur Auswahl der für die aktive Steuerung der Flügel (13, F1-F6) verwendeten virtuellen Kurvenscheiben fortlaufend die Schnelllaufzahl λ der Windkraftanlage (10) bestimmt wird, wobei die Schnelllaufzahl das Verhältnis der Umfangsgeschwindigkeit der Flügel (13, F1-F6) zur Windgeschwindigkeit (v_{w}) angibt, und dass nach Massgabe der bestimmten Schnelllaufzahl λ die für die aktive Steuerung der Flügel (13, F1-F6) verwendete virtuelle Kurvenscheibe ausgewählt bzw. zwischen verschiedenen virtuellen Kurvenscheiben gewechselt wird.

12. Verfahren nach Anspruch 10, **dadurch gekennzeichnet, dass** die virtuellen Kurvenscheiben auf eine Nullposition der Windkraftanlage (10) bezogen sind, und dass die Nullposition von der Windrichtung abhängig ist.

13. Verfahren nach wenigstens einem der Ansprüche 9 bis 12, **dadurch gekennzeichnet, dass** aus einer Messung der Relativanströmung der Flügel (13, F1-F6) über die Rotorumfangsgeschwindigkeit die absolute Windgeschwindigkeit und Windrichtung trigonometrisch berechnet wird.

14. Verfahren nach wenigstens einem der Ansprüche 9 bis 13, **dadurch gekennzeichnet, dass** mit einer Windmesseinrichtung (W1-W3) kurzzeitig hohe örtliche Turbulenzen festgestellt werden, die zu einer Flügel- und Turbinen-Überlastung führen könnten, damit daraus eine entlastende Flügelverstellung oder vollständige Flügelabschaltung erfolgen kann.

15. Verfahren nach wenigstens einem der Ansprüche 9 bis 14, **dadurch gekennzeichnet, dass** mit einer Tangentiall<raftmessung zusammen mit einer Windmesseinrichtung (W1 -W3) der Flügelvortrieb und somit der Turbinenwirkungsgrad optimiert wird.

## Claims

1. A vertical wind turbine (10) comprising a cell with a plurality of vertical blades (13; F1-F6), each mounted rotatably at the bottom and top at the end of a radial arm, which are arranged within the cell distributed on a concentric circle around a vertical machine axis (MA) and are jointly movable on this circle and connected in a rotationally fixed manner to a main shaft (20), wherein the blades (13; F1-F6) in the cell are each mounted individually rotatably about a vertical axis of rotation (12) extending in particular through their interior, and wherein means (39; 39a, b; 49, 50; 52) are associated with each of the blades (13; F1-F6), with which during rotation about the machine axis (MA) the blade (13; F1-F6) can be moved independently of the other blades into a predetermined and at any time changeable rotational position about its axis of rotation (12), wherein the arms respectively form a fictive ring at the top and bottom of the cell, **characterised in that** a wind measurement device (W1-W3) per ring is attached at the outside of one of the radial arms respectively.

2. Vertical wind turbine according to claim 1, **characterised in that** the wind measurement device (W1-W3) is at a sufficient distance from the end of the arm so as not to be influenced by the air vortex area of the end of the arm.

3. Vertical wind turbine according to claim 1 or 2, **characterised in that** the wind measurement devices (W1-W3) on respectively one arm per ring allow the blades (13; F1-F6) to be controlled individually and independently of one another.

4. Vertical wind turbine according to at least one of the above-mentioned claims, **characterised in that** the wind measurement device (W1-W3) is set up to determine the exact relative wind flow in direction and speed in relation to the arm and thus also to the blade (13; F1-F6) at each point in time of the rotor rotation.

5. Vertical wind turbine according to at least one of the above-mentioned claims, **characterised in that** the wind measuring device (W1-W3) preferably comprises an ultrasonic anemometer for measuring wind direction and wind speed.

6. Vertical wind turbine according to at least one of the above-mentioned claims, **characterised by** an active blade control which receives a plurality of input signals directly from a measuring system comprising a wind speed sensor (67), a wind direction sensor (68) and/or a rotor torque transducer (69).

7. Vertical wind turbine according to at least one of the above-mentioned claims, **characterised in that** the means (39; 39a, b; 49, 50; 52) for changing the rotational position of the blades (13, F1-F6) comprise an electrically or hydraulically driven motor (39a, b).

8. Vertical wind turbine according to at least one of the above-mentioned claims, **characterised in that** a force measurement device (K1-K3) for radial and tangential force direction is provided at the bottom and/or top of the cell at the blade bearing of the blades (13; F1-F6) in order to determine and take into account the forces occurring at the blades.

9. Method for operating a vertical wind turbine (10) according to at least one of the above-mentioned claims, wherein the rotational position of the individual blades (13, F1-F6) of the wind turbine about its axis of rotation (12) is actively controlled independently of one another in accordance with measured values of the wind speed (v_{w} ), the wind direction, the rotational speed of the wind turbine (10) and the position of the blades on their rotation about the machine axis (MA), **characterised in that** with the wind measurement device (W1-W3), attached per ring at the outside of one of the radial arms respectively, the exact relative wind flow is determined in direction and speed in relation to the arm and thus to the blade (13, F1-F6) at each point in time of the rotor rotation.

10. Method according to claim 9, **characterised in that** virtual cam plates are provided for the blade angle, which describes the deflection of a blade (13, F1-F6) from a base position tangentially to the rotation path about the machine axis (MA), which cam plates respectively determine the course of the blade angle over the position of the blade (13, F1-F6) on the rotation path, and **in that** the active control of the individual blades (13, F1-F6) takes place in accordance with the virtual cam plates.

11. Method according to claim 10, **characterised in that**, in order to select the virtual cam discs used for the active control of the blades (13, F1-F6), the tip-speed ratio λ of the wind turbine (10) is continuously determined, the tip-speed ratio indicating the ratio of the peripheral speed of the blades (13, F1-F6) to the wind speed (v_{w}), and **in that** the virtual cam disc used for the active control of the blades (13, F1-F6) is selected respectively changed between different virtual cam discs in accordance with the determined tip-speed ratio λ.

12. Method according to claim 10, **characterised in that** the virtual cam discs are related to a zero position of the wind turbine (10), and **in that** the zero position is dependent on the wind direction.

13. Method according to at least one of claims 9 to 12, **characterised in that** the absolute wind speed and wind direction are calculated trigonometrically from a measurement of the relative inflow of the blades (13, F1-F6) over the rotor circumferential speed.

14. Method according to at least one of claims 9 to 13, **characterised in that** a wind measurement device (W1-W3) detects short-time high local turbulence, which could lead to a blade and turbine overload, so that a relieving blade adjustment or complete blade shutdown can take place.

15. Method according to at least one of claims 9 to 14, **characterised in that** a tangential force measurement together with a wind measurement device (W1- W3) is used to optimise the blade propulsion and thus the turbine efficiency.

## Revendications

1. Éolienne verticale (10), comprenant une cellule pourvue d'une pluralité de pales (13 ; F1 à F6) verticales, logées chacune de manière rotative en bas et en haut sur l'extrémité d'un bras radial, qui à l'intérieur de la cellule sont placées en distribution sur un cercle concentrique, autour d'un axe vertical de la machine (MA) et qui sont conjointement mobiles sur ledit cercle et reliées de manière solidaire en rotation avec un arbre principal (20), dans la cellule, les pales (13 ; F1 à F6) étant logées chaque fois individuellement de manière rotative autour d'un axe de rotation (12) vertical, s'écoulant notamment à travers leur intérieur et à chacune des pales (13 ; F1 à F6) étant associés des moyens (39 ; 39a, b ; 49, 50 ; 52) à l'aide desquels pendant la circulation autour de l'axe de la machine (MA), la pale (13 ; F1 à F6) peut être amenée, indépendamment des autres pales dans une position en rotation prédéfinie et variable en tout temps autour de son axe de rotation (12), les bras formant chacun un anneau fictif en haut et en bas sur la cellule, **caractérisée en ce qu'**un dispositif de mesure du vent (W1 à W3) pour chaque bague est fixé sur chaque fois l'un des bras radiaux.

2. Éolienne verticale selon la revendication 1, **caractérisée en ce que** le dispositif de mesure du vent (W1 à W3) présente par rapport à l'extrémité du bras un écart suffisant pour ne pas être influencé par la zone de tourbillons d'air de l'extrémité du bras.

3. Éolienne verticale selon la revendication 1 ou 2, **caractérisée en ce que** les dispositifs de mesure du vent (W1 à W3) sur chaque fois un bras par anneau permettent de commander individuellement les pales (13 ; F1 à F6), indépendamment les unes des autres.

4. Éolienne verticale selon au moins l'une quelconque des revendications précédemment citées, **caractérisée en ce que** le dispositif de mesure du vent (W1 à W3) est configuré pour déterminer à chaque instant de la rotation du rotor l'afflux relatif précis du vent au niveau de la direction et de la vitesse en rapport au bras et donc également en rapport à la pale (13 ; F1 à F6) .

5. Éolienne verticale selon au moins l'une quelconque des revendications précédemment citées, **caractérisée en ce que** le dispositif de mesure du vent (W1 à W3) comprend, pour mesurer la direction du vent et la vitesse du vent de préférence un anémomètre à ultrasons.

6. Éolienne verticale selon au moins l'une quelconque des revendications précédemment citées, **caractérisée par** une commande active des pales qui reçoit plusieurs signaux d'entrée directement de la part d'un système de mesure, qui comprend un enregistreur (67) de la vitesse du vent, un enregistreur (68) de la direction du vent et ou un enregistreur (69) du couple de rotation du rotor.

7. Éolienne verticale selon au moins l'une quelconque des revendications précédemment citées, **caractérisée en ce que** les moyens (39 ; 39a, b ; 49, 50 ; 52) destinés à faire varier la position en rotation des pales (13, F1 à F6) comprennent un moteur (39a, b) à entraînement électrique ou hydraulique.

8. Éolienne verticale selon au moins l'une quelconque des revendications précédemment citées, **caractérisée en ce qu'**en bas près de la cellule et / ou en haut près du logement de pale des pales (13 ; F1 à F6) est prévu un dispositif de mesure (K1 à K3) des forces pour une direction radiale et tangentielle des forces, destiné à déterminer les forces survenant sur les pales et à les prendre également en compte.

9. Procédé opérationnel d'une éolienne verticale (10) selon au moins l'une quelconque des revendications précédemment citées, la position en rotation des pales (13, F1 à F6) individuelles de l'éolienne autour de leur axe de rotation (12) indépendamment les unes des autres étant commandée activement selon les critères de valeurs mesurées de la vitesse du vent (V_{w}), de la direction du vent, de la vitesse de rotation de l'éolienne (10) et de la position des pales sur leur circulation autour de l'axe de la machine (MA), **caractérisé en ce qu'**à l'aide du dispositif de mesure du vent (W1 à W3) fixé pour chaque anneau sur chaque fois l'un des bras radiaux, l'on détermine à chaque instant de la rotation du rotor l'afflux relatif précis du vent au niveau de la direction et de la vitesse en rapport au bras et donc également en rapport à la pale (13 ; F1 à F6).

10. Procédé selon la revendication 9, **caractérisé en ce que** pour l'angle de pale qui décrit la déviation d'une pâle (13, F1 à F6) à partir d'une position de base, de manière tangentielle au cercle de circulation autour de l'axe de la machine (MA), l'on met à disposition des cames virtuelles, lesquelles fixent chacune le parcours de l'angle de pale sur la position de la pale (13, F1 à F6) sur le cercle de circulation, et **en ce que** la commande active des pales (13, F1 à F6) individuelles s'effectue selon les critères des cames virtuelles.

11. Procédé selon la revendication 10, **caractérisé en ce que** pour sélectionner les cames virtuelles utilisées pour la commande active des pales (13, F1 à F6), l'on détermine en continu le coefficient de puissance maximal λ de l'éolienne (10), le coefficient de puissance maximal indiquant le rapport de la vitesse périphérique des pales (13, F1 à F6) à la vitesse du vent (V_{w}) et **en ce que** selon le critère du coefficient de puissance maximal λ déterminé, l'on sélectionne la came virtuelle utilisée pour la commande active des pales (13, F1 à F6) ou l'on change entre différentes cames virtuelles.

12. Procédé selon la revendication 10, **caractérisée en ce que** les cames virtuelles sont rapportées à une position zéro de l'éolienne (10) et **en ce que** la position zéro dépend de la direction du vent.

13. Procédé selon au moins l'une quelconque des revendications 9 à 12, **caractérisé en ce qu'**à partir d'une mesure de l'afflux relatif des pales (13, F1 à F6), l'on calcule la vitesse absolue du vent et la direction du vent, via la vitesse périphérique du rotor.

14. Procédé selon au moins l'une quelconque des revendications 9 à 13, **caractérisée en ce qu'**à l'aide d'un dispositif de mesure du vent (W1 à W3), l'on constate brièvement des turbulences locales élevées, susceptibles de générer une surcharge des pales et des turbines, pour procéder à partir de là à un réglage à effet de décharge des pales ou à un arrêt complet des pales.

15. Procédé selon au moins l'une quelconque des revendications 9 à 14, **caractérisé en ce que** par une mesure des forces tangentielles, conjointement avec un dispositif de mesure du vent (W1 à W3), l'on optimise la propulsion des pales et donc le niveau de rendement des turbines.
